# NEUE EUROPÄISCHE PATENTSCHRIFT

(11) **EP 0 771 606 B2**
(45) Veröffentlichungstag und Bekanntmachung des Hinweises auf die Entscheidung über den Einspruch: **16.11.2005**
(45) Hinweis auf die Patenterteilung: 11.12.2002
(21) Anmeldenummer: 96115096.8
(22) Anmeldetag: 20.09.1996
(51) Int. Cl.: B23K 26/00

(54) **Strahlschweissverfahren mit Kantenverrundung**
Beam welding process with edge rounding
Procédé de soudage avec un faisceau avec arrondissement des bords

(30) Priorität: 04.11.1995 DE 19541207
(43) Veröffentlichungstag der Anmeldung: 07.05.1997
(73) Patentinhaber: Volkswagen Aktiengesellschaft, 38436 Wolfsburg (DE)
(72) Erfinder: Hammer, Thorge, Dipl.-Ing., 38554 Weyhausen (DE); Elsner, Christian, Dipl.-Ing., 13353 Berlin (DE)
(74) Vertreter: Tergau & Pohl Patentanwälte

(56) Entgegenhaltungen:
- EP-A- 0 276 664
- EP-A- 0 552 468
- WO-A-92/11971
- DD-A- 273 796
- DE-C- 3 346 144
- DE-T2- 3 780 688
- DE-T2- 69 203 306
- PATENT ABSTRACTS OF JAPAN vol. 010, no. 047 (M-456), 25.Februar 1986 & JP 60 199585 A (TOSHIBA KK), 9.Oktober 1985,
- PATENT ABSTRACTS OF JAPAN vol. 010, no. 109 (M-472), 23.April 1986 & JP 60 240395 A (MITSUBISHI JUKOGYO KK), 29.November 1985,
- PATENT ABSTRACTS OF JAPAN vol. 095, no. 006, 31.Juli 1995 & JP 07 060470 A (SUMITOMO HEAVY IND LTD), 7.März 1995,
- Fachbeiträge Neues in der Schweisstechnik 1994, Schweissen und Schneiden 47(1995), Heft 5, Seiten 388, 390, 409
- Schimpke, P; Horn, H.: Praktisches Handbuch der gesamten Schweisstechnik, Dritter Band: Berechnen und Entwerfen der Schweisskonstruktionen. Berlin: Springer 1959, Seiten 34, 35, 136, 137

## Beschreibung

Die Erfindung betrifft ein Strahlschweißverfahren, bei dem ein erster Strahl auf eine zwischen einer Oberfläche eines ersten Bleches und einer Stirnfläche eines zweiten Bleches gebildete Kehle gerichtet ist.

Bei Strahlschweißverfahren wird ein Strahl energiereicher Strahlung auf die miteinander zu verschweißenden Werkstücke gerichtet. Insbesondere zum Verschweißen dünner Stahlbleche werden Laserstrahlen als Schweißstrahl verwendet. Beispielsweise im Karosseriebau werden dünne Stahlbleche durch Laserstrahlen miteinander verschweißt, indern der Laserstrahl auf eine zwischen beiden Blechen gebildete Kehle gerichtet wird. Die Kehle wird dabei im allgemeinen zwischen der Oberfläche eines ersten Bleches und der Stirnfläche eines auf diesem liegenden zweiten Bleches gebildet. Dabei kann der Schweißstoß ein Parallel- oder Überlappstoß sein, die miteinander zu verbindenden Bleche können jedoch auch einen Schrägstoß bilden, d.h. die Ebenen der beiden Bleche verlaufen dann nicht parallel, sondern unter einem spitzen Winkel zueinander.

Die miteinander verschweißten Bleche werden häufig durch eine aufgebrachte Lackschicht gegen Korrosion geschützt.

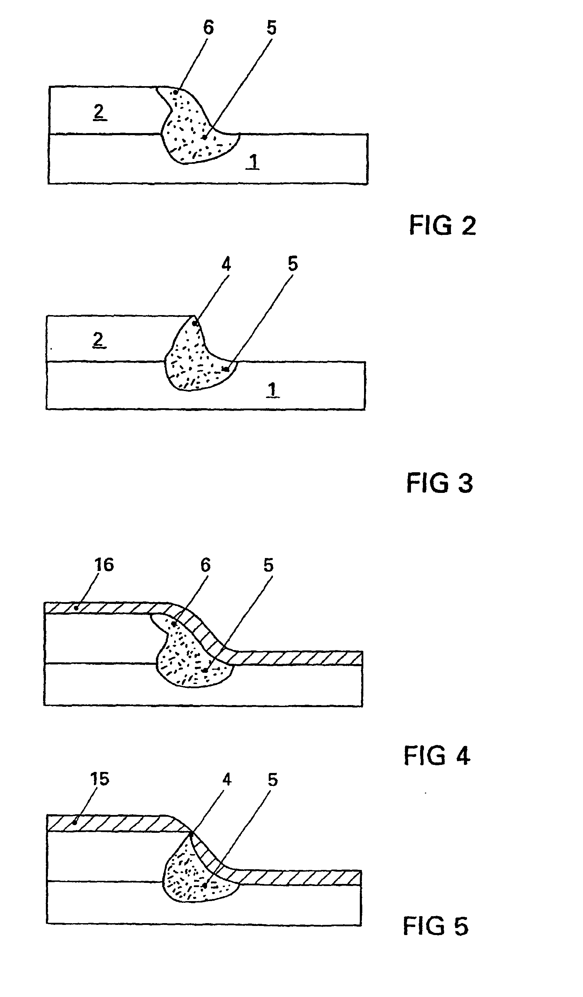

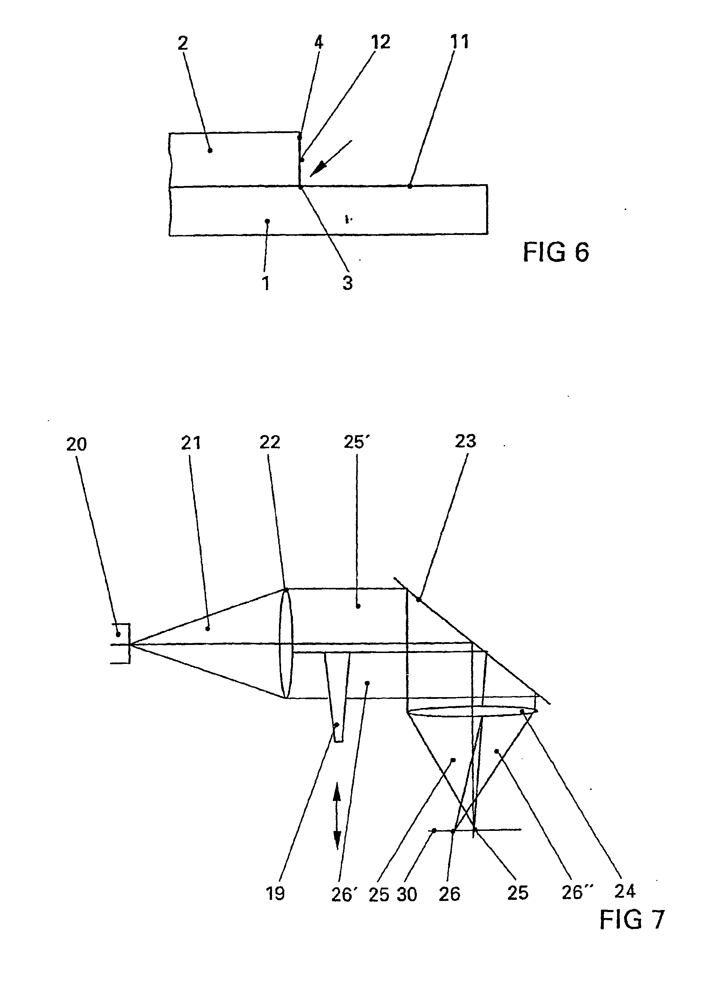

Bei dem aus dem Stand der Technik bekannten Schweißverfahren bei dem zwei gemäß Figur 6 aufelnander gelegte Bleche 1/2 längs der Kehle 3 miteinanderverschweißtwerden, entsteht eine Schweißnaht, wie sie in Figur 3 dargestellt ist. Wird diese durch bekannte Lackierverfahren beschichtet, so entsteht eine Lackschicht mit unterschiedlicher Dicke, so wie in Figur 5 dargestellt. Dabei ist an dem bekannten Verfahren insbesondere störend, daß die nach dem Verschweißen der beiden Bleche miteinander verbleibende scharfe, freiliegende Kante des zweiten Bleches erhalten bleibt und zu der sogenannten "Lackflucht" führt. Wie Figur 5 zeigt, ist die Lackschicht im Bereich der Kante 4 deutlich dünner, so daß der gewünschte Korrosionsschutz in diesem Bereich nicht gewährleistet ist. Bei ausgeführten Beispielen wurde festgestellt, daß eine im Regelzustand etwa 30 µm dicke Lackschicht im Kantenbereich lediglich 3 um oder weniger stark ist.

Der Erfindung liegt daher die Aufgabe zugrunde, bekannte Strahlschweißverfahren, insbesondere Laserschweißverfahren, so zu verbessern, daß die erwähnten Nachteile des Standes der Technik entfallen und eine Schweißnahtform geschaffen wird, die sich problemlos durch eine Lackschicht gegen Korrosionen schützen läßt.

Die Lösung der Aufgabe ist bei einem gattungsgemäßen Strahlschweißverfahren durch die Merkmale des Anspruchs 1 gekennzeichnet.

Zur Durchführung des erfindungsgemäßen Verfahrens wäre prinzipiell eine Vorrichtung geeignet, wie sie aus der DE-PS 33 46 144 C1 bekannt ist. Die Verwendung von Spiegeln zur Aufteilung eines einzigen Strahls ist jedoch dann problematisch, wenn der Strahl kleine Abmessungen hat und wenn die beiden Teilstrahlen nahe bei einander fokussiert werden sollen, wie es bei dem vorliegenden erfindungsgemäßen Schweißverfahren wünschenswert ist.

Das erfindungsgemäße Verfahren sieht vor, daß die freie Kante des zweiten Bleches durch einen zweiten Schweißstrahl teilweise zum Schmelzen gebracht und so unter dem Einfluß von Schwerkraft und intermolekularen Kräften verrundet wird, wobei der zweite Strahl dem ersten Strahl synchron mit konstantem Abstand vor- oder nachgeführt und als Teilstrahl der den ersten Strahl generierenden Strahlenquelle erzeugt wird.

Das erfindungsgemäße Schweißverfahren eignet sich insbesondere zur Verwendung mit Laserstrahlen die bevorzugt durch einen Nd:YAG-Laser erzeugt werden. Weitere bevorzugte Ausführungsformen der Erfindung sind in den Unteransprüchen beschrieben.

Die Erfindung wird im folgenden anhand von in den Zeichnungen dargestellten Ausführungsbeispielen näher beschrieben. In der Zeichnung zeigen:
- Figur 1 -: eine perspektivische schematische Darstellung des erfindungsgemäßen Schweißverfahrens,
- Figur 2 -: eine nach dem erfindungsgemäßen Verfahren ausgeführte Schweißnaht,
- Figur 3 -: eine nach dem Stand der Technik hergestellte Schweißnaht,
- Figur 4 -: Bleche und Schweißnaht gemäß Figur 2 im lackierten Zustand,
- Figur 5 -: Bleche und Schweißnaht gemäß Figur 3 im lackierten Zustand,
- Figur 6 -: zwei miteinander zu verschweißende Bleche vor dem Schweißvorgang, und
- Figur 7 -: eine Prinzipskizze einer zur Durchführung des erfindungsgemäßen Verfahrens geeigneten Schweißvorrichtung.

Figur 6 zeigt zwei einen Parallel- oder Überlapp-Stoß bildende Bleche 1 und 2. Zwischen der Oberfläche 11 eines ersten Bleches 1 und der Stirnfläche 12 eines zweiten Bleches 2 ist eine Kehle 3 gebildet, auf die ein Schweißstrahl in Richtung des Pfeiles gerichtet werden soll. Eine freiliegende Kante des oberen, d.h. zweiten Bleches 2 trägt das Bezugszeichen 4.

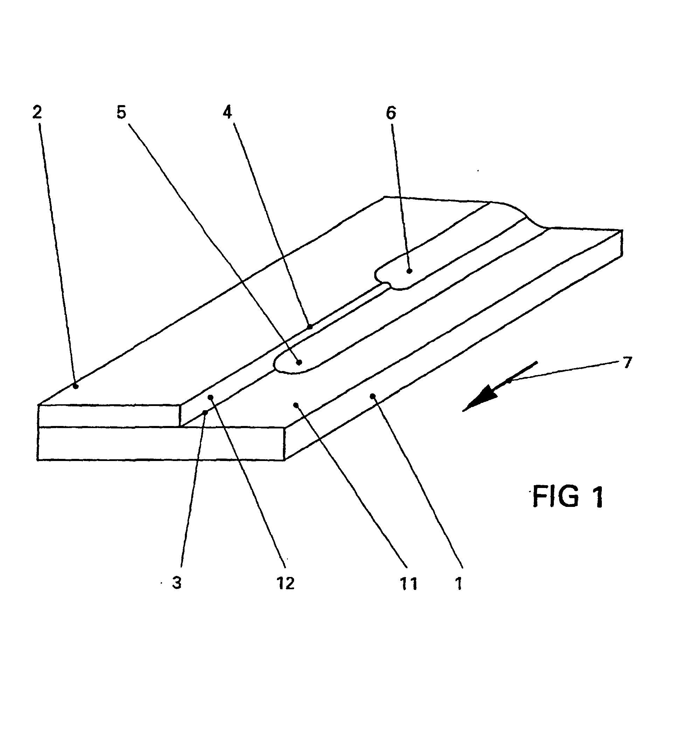

Wird eine Schweißnaht erzeugt, indern in Richtung des in Figur 6 gezeichneten Pfeils ein einzelner Laserstrahl auf die Kehle 3 gerichtet wird, so entsteht eine Schweißnaht, wie sie in Figur 1 mit dem Bezugszeichen 5 bezeichnet ist. Wie die schematische Darstellung gemäß Figur 3 zeigt, bleibt dabei die freiliegende Kante 4 erhalten.

Wird eine solche Schweißnaht gemäß Figur 3 mit einer Lackschicht beschichtet, so bildet sich unter dem Einfluß von Oberflächenkräften des Lackes und ähnlichen Einflüssen eine Lackschicht 15 unterschiedlicher Dicke aus, so wie sie in Figur 5 dargestellt ist. Im Bereich der freiliegenden Kante 4 ist die Dicke der Lackschicht deutlich verringert, wodurch sich Korrosionsprobleme ergeben.

Wie Figur 1 weiter zeigt, ist erfindungsgemäß vorgesehen, einen zweiten Laserstrahl in kurzem Abstand synchron hinter dem ersten Laserstrahl zu führen, um diesen zweiten Teilstrahl auf die Kante 4 zu richten. Es wird so eine zweite Schweißnahtlage 6 erzeugt, die zu einer Verrundung der Kante 4 führt.

Figur 2 zeigt schematisch, wie die Kontur des fertiggestellten Werkstückes aussieht. Wird ein solches Werkstück bzw. eine so geformte Schweißnaht gemäß Figur 4 mit einer Lackschicht beschichtet, so ergibt sich ein im wesentlichen gleichförmiger Dickenverlauf der Lackschicht, so daß bei verringerten Kosten ein verbesserter Korrosionsschutz gewährleistet wird.

Wie Figur 1 zeigt, eilte der die Schweißnahtiage 5 erzeugende Laserstrahl in Schweißrichtung 7 dem die Schweißnahtlage 6 erzeugenden zweiten Teilstrahl voraus. Dabei ist es unerheblich, ob die beiden Laserstrahlen synchron über das Werkstück geführt werden, oder ob umgekehrt das Werkstück entgegen der durch den Pfeil 7 indizierten Schweißrichtung vorgeschoben wird.

Figur 7 zeigt schematisch eine zur Durchführung des erfindungsgemäßen Verfahrens geeignete Schweißvorrichtung. Eine Strahlenquelle in Form eines Lasers 20 erzeugt einen Strahlenbündel 21 (Hauptstrahl), das sich divergierend ausbreitet und durch eine erste Sammel-Linse 22 annähernd parallel ausgerichtet wird. Die parallelen Strahlen 25' treffen auf ein Umlenkspiegel 23, und werden durch eine zweite Sammel-Linse 24 in einem ersten Brennpunkt 25 fokussiert. Es wird so ein erster Laserstrahl 25" erzeugt. Die Linsen können aus mehreren zusammengesetzt sein.

Ein vorgesehener optischer Keil 19 lenkt einen Teil des durch die erste Sammel-Linse 22 hindurchtretenden Strahlenbündels so ab, daß das entstehende Teilstrahlenbündel 26' nach Reflektion am Umlenkspiegel 23 durch die zweite Sammel-Linse 24 in einen zweiten Brennpunkt 26 fokussiertwird. Es wird so ein zweiter Laserstrahl 26" erzeugt.

Auf diese Weise werden zwei Brennpunkte 25 und 26 geschaffen, von denen der eine in der Kehle für die Erzeugung der eigentlichen Schweißnaht liegt (erster Brennpunkt 25), undderanderezumverrundenauf die freiliegende Kante 4 des oberen Bleches 2 positioniert wird (zweiter Brennpunkt 26). Ein bevorzugter Abstand der beiden Brennpunkte voneinander beträgt bis 10 mm.

Wie Figur 7 schematisch weiter zeigt, kann der optische Keil 19 in radialer Richtung bewegtwerden, um den Anteil des Hauptstrahls 21, der zu einem zweiten Teilstrahl 26' umgeformt wird, zu vergrößern oder zu verringern. zweiten Bleches 2 trägt das Bezugszeichen 4.

Wird eine Schweißnaht erzeugt, indern in Richtung des in Figur 6 gezeichneten Pfeils ein einzelner Laserstrahl auf die Kehle 3 gerichtet wird, so entsteht eine Schweißnaht, wie sie in Figur 1 mit dem Bezugszeichen 5 bezeichnet ist. Wie die schematische Darstellung gemäß Figur 3 zeigt, bleibt dabei diefreiliegende Kante 4 erhalten.

Wird eine solche Schweißnaht gemäß Figur 3 mit einer Lackschicht beschichtet, so bildet sich unter dem Einfluß von Oberflächenkräften des Lackes und ähnlichen Einflüssen eine Lackschicht 15 unterschiedlicher Dicke aus, so wie sie in Figur 5 dargestellt ist. Im Bereich derfreiliegenden Kante 4 ist die Dicke der Lackschicht deutlich verringert, wodurch sich Korrosionsprobleme ergeben.

## Patentansprüche

1. Strahlschweißverfahren, bei dem ein erster Strahl (25") auf eine zwischen einer Oberfläche (11) eines ersten Bleches (1) und einer Stirnfläche (12) eines zweiten Bleches (2) gebildete Kehle (3) gerichtet ist, **dadurch gekennzeichnet, daß** ein zweiter Strahl (26") auf die freie Kante (4) des zweiten Bleches (2) gerichtet ist, wobei der zweite Strahl (26") dem ersten Strahl (25") synchron mit konstantem Abstand voroder nachgeführt wird und der zweite Strahl als Teilstrahl von der den ersten Strahl generierenden Strahlenquelle (20) erzeugt wird.

2. Strahlschweißverfahren nach einem der vorhergehenden Ansprüche, **dadurch gekennzeichnet, daß** erster und zweiter Strahl Laserstrahlen sind.

3. Strahlschweißverfahren nach Anspruch 2, **dadurch gekennzeichnet, daß** die Laserstrahlen durch einen Nd:YAG-Laser erzeugt werden.

4. Strahlschweißverfahren nach einem der vorhergehenden Ansprüche, **dadurch gekennzeichnet, daß** die beiden miteinander zu verbindenden Bleche (1, 2) miteinander einen Parallelstoß bilden.

5. Strahlschweißverfahren nach einem der Ansprüche 1 bis 3, **dadurch gekennzeichnet, daß** die beiden mitelnander zu verbindenden Bleche (1, 2) mitelnander einen Überlappstoß bilden.

6. Strahlschweißverfahren nach einem der Ansprüche 1 bis 3, **dadurch gekennzeichnet, daß** die beiden miteinander zu verbindenden Bleche (1, 2) miteinander einen Schrägstoß bilden.

7. Strahlschweißverfahren nach den Ansprüchen 1 und 2, **dadurch gekennzeichnet, daß** der Abstand zwischen dem ersten und zweiten Laserstrahl bis 10 mm beträgt.

## Claims

1. Beam welding method, in which a first beam (25'') is directed onto a fillet (3) formed between a surface (11) of a first sheet (1) and an end face (12) of a second sheet (2), **characterized in that** a second beam (26'') is directed onto the free edge (4) of the second sheet (2), the second beam (26'') being synchronously directed in advance of or so as to trail the first beam (25'') at a constant distance apart, and the second beam being produced as a component beam from the beam source (20) generating the first beam.

2. Beam welding method according to one of the preceding claims, **characterized in that** the first and second beams are laser beams.

3. Beam welding method according to Claim 2, **characterized in that** the laser beams are produced by an Nd:YAG laser.

4. Beam welding method according to one of the preceding claims, **characterized in that** the two sheets (1, 2) to be connected to one another form a parallel joint with one another.

5. Beam welding method according to one of Claims 1 to 3, **characterized in that** the two sheets (1, 2) to be connected to one another form a lap joint with one another.

6. Beam welding method according to one of Claims 1 to 3, **characterized in that** the two sheets (1, 2) to be connected to one another form a bevelled joint with one another.

7. Beam welding method according to Claims 1 and 2, **characterized in that** the distance between the first and second laser beams is up to 10 mm.

## Revendications

1. Procédé de soudage par rayonnement, dans lequel un premier faisceau de rayonnement (25") est orienté sur une rainure (3) formée entre une surface (11) d'une première tôle (1) et une surface frontale (12) d'une deuxième tôle (2), **caractérisé en ce qu'**un deuxième faisceau de rayonnement (26") est orienté sur le chant libre (4) de la deuxième tôle (2), le deuxième faisceau de rayonnement (26") étant guidé de manière synchrone par rapport au premier faisceau de rayonnement (25"), avant ou après ce dernier et à distance constante par rapport à lui, et le deuxième faisceau de rayonnement étant créé comme faisceau partiel par la source de rayonnement (20) qui génère le premier faisceau.

2. Procédé de soudage par rayonnement selon l'une des revendications précédentes, **caractérisé en ce que** le premier et le deuxième faisceau sont des faisceaux laser.

3. Procédé de soudage par rayonnement selon la revendication 2, **caractérisé en ce que** les faisceaux laser sont créés par un laser Nd:YAG.

4. Procédé de soudage par rayonnement selon l'une des revendications précédentes, **caractérisé en ce que** les deux tôles (1, 2) qui doivent être reliées l'une à l'autre forment ensemble un joint parallèle.

5. Procédé de soudage par rayonnement selon l'une des revendications 1 à 3, **caractérisé en ce que** les deux tôles (1, 2) qui doivent être reliées l'une à l'autre forment l'une avec l'autre un joint à superposition.

6. Procédé de soudage par rayonnement selon l'une des revendications 1 à 3, **caractérisé en ce que** les deux tôles (1, 2) qui doivent être reliées l'une à l'autre forment ensemble un joint oblique.

7. Procédé de soudage par rayonnement selon les revendications 1 et 2, **caractérisé en ce que** la distance entre le premier et le deuxième faisceau laser est jusqu'à 10 mm.
